# EUROPÄISCHE PATENTSCHRIFT

(11) **EP 1 522 568 B1**
(45) Veröffentlichungstag und Bekanntmachung des Hinweises auf die Patenterteilung: **30.01.2013**
(21) Anmeldenummer: 04023994.9
(22) Anmeldetag: 08.10.2004
(51) Int. Cl.: C09J 133/02

(54) **Klebstoff und seine Verwendung**
Adhesive and use thereof
Adhésif et son utilisation

(30) Priorität: 10.10.2003 DE 10348222
(43) Veröffentlichungstag der Anmeldung: 13.04.2005
(73) Patentinhaber: BellandTechnology AG, 91278 Pottenstein (DE)
(72) Erfinder: Leder, Herbert, 76547 Sinzheim (DE); Hammer-Wolf, Elvira, 4532 Feldbrunnen (CH)
(74) Vertreter: Patentanwälte Ruff, Wilhelm, Beier, Dauster & Partner

(56) Entgegenhaltungen:
- EP-A- 0 846 727
- EP-A- 0 928 316

## Beschreibung

Die Erfindung betrifft einen Klebstoff auf Basis eines Polymers, das in Verbindung mit wässriger Feuchtigkeit klebrig gemacht werden kann, sowie seine Verwendung.

Industrieprodukte mit selbstklebenden Eigenschaften sind aus dem täglichen Gebrauch hinlänglich bekannt, Beispiele hierfür sind die verschiedensten Arten von Folien und Klebebändern, die u.a. in der Verpackungs-, Bau- oder Möbelbranche wie auch in der Metall-, Glas und Automobilindustrie eingesetzt werden oder auch Büroprodukte wie Klebestreifen, Haftetiketten oder Haftnotizen. Ihnen ist gemein, dass sie für das Verkleben auf verschiedenen Substraten einseitig bzw. je nach ihrer speziellen Anwendung auch beidseitig mit Klebstoff beschichtet sind.

Produktion, Handhabung und auch die sich nach Gebrauch anschließende Entsorgung dieser beschichteten Selbstklebeprodukte weisen einige bekannte Nachteile auf.

Bei selbstklebenden Klebstoffen ist es notwendig, die Klebstoffschicht mit einem Trägermaterial, wie silikonisiertem Papier, zu schützen, damit sie nicht vor Gebrauch, z.B. durch Verschmutzung, an Aktivität verliert, oder im Fall von Folien, die Folienschichten sich nicht untereinander verkleben. Nach der Applikation fällt das Trägermaterial als nicht recyclebarer Abfall an und stellt somit ein Entsorgungsproblem dar.

Nach ihrer Anwendung ist die Entfernung von Klebefolien oder Haftetiketten, z.B. von Glas- oder Porzellanwaren, häufig mit großen Schwierigkeiten verbunden. Etiketten und Folien beispielsweise können nur manuell entfernt werden, die Entfernung von Klebstoffrückständen gelingt oft nur mit großem Aufwand unter Verwendung von organischen Lösungsmitteln.

Die gezielte Herstellung klebriger Folien ohne Klebstoffbeschichtung auf Basis von Ethylen-Vinyl-Acetat (EVA) oder Polyvinylchlorid-weich (PVCweich) und Low Density Polyethylene (LDPE) mit entsprechenden Tackifiern ist ebenfalls bekannt. Diese Folien besitzen nur eine schwache Klebkraft. Ihre Haftung ist hauptsächlich für die Fixierung von Folie auf Folie geeignet, sie sind deshalb nur begrenzt einsetzbar als Wickelfolien für die industrielle Verpackung und in der Lebensmittelverpackung.

Es gibt auch wasserlösliche Klebstoffe. Diese haben den Nachteil, dass sie bei Verwendung von zuviel Wasser verdünnt bzw. abgelöst werden und dann nicht mehr kleben.

Aus der EP 0 022 636 A1 ist eine durch Wasser aktivierbare Klebstoffzusammensetzung bekannt. Die Zusammensetzung weist eine polymere Substanz auf der Basis eines Copolymers von Methylvinylether und Maleinsäureanhydrid sowie ein Vernetzungsmittel auf der Basis von polyfunktionellen Epoxiden und polyfunktionellen Aziridinen auf. Die so zusammengesetzte Klebstoffmischung kann beispielsweise zum Verkleben von polymeren Folien verwendet werden.

Gegenstand der Erfindung ist die Verwendung einer Folie aus einer zweiphasigen, in wässrigem Alkali auflösbaren Polymerkombination aus
a. einem Alkali-löslichen Co- oder Terpolymer einer α-β-ungesättigten Monocarbonsäure, das im wesentlichen gleichmäßig über die Molekülkette verteilt Carboxylgruppen besitzt, als kontinuierliche Phase und
b. einem in wässrigem Alkali nicht lösbaren Co- oder Terpolymer, das entlang seiner Polymerkette Epoxygruppen aufweist, als diskontinuierliche feindisperse Phase, wobei
c. an der Oberfläche der Polymerteilchen der diskontinuierlichen Phase liegende freie Epoxygruppen mit einem Teil der Carboxylgruppen des Polymers der kontinuierlichen Phase durch Esterbildung miteinander verknüpft sind und die übrigen Carboxylgruppen in unveränderter Form vorliegen,
als Klebefolie.

Die Polymerkombination wurde bereits in der EP 0 928 316 B1 beschrieben, auf deren Inhalt hiermit Bezug genommen wird. Sie ist bekannt als Schmelze, Pulver und in Form von Folien. Die WO 98/7778 beschreibt in Alkali auflösbare Waschmittelbeutel aus Folien der Polymerkombination.

Überraschenderweise wurde gefunden, dass diese Polymerkombination in feuchtem Zustand eine haftende Bindung sowohl zu glatten als auch zu strukturierten Oberflächen ausbilden kann, so z.B. zu Glas, Metalloberflächen, Kunststoffen, Vliesstoffen, Geweben, Lacken, Papier oder auch zu gleichartigen Folien. Die eingegangene Bindung weist nach Trocknung auch zu den glatten Oberflächen eine außergewöhnlich hohe Festigkeit gegenüber mechanischen Kräften auf. In trockenem Zustand ist das Polymer selbst nicht klebrig.

Die Polymerkombination kann durch Zuführen wässriger Feuchtigkeit klebrig gemacht werden, wird aber dabei nicht aufgelöst. Produkte aus dieser Polymerkombination können ohne zusätzliche Klebstoffbeschichtung verklebt werden oder selbst als Klebstoff dienen. Die oben geschilderten Nachteile und Einschränkungen treten bei der erfindungsgemäßen Verwendung nicht auf.

Die notwendige Feuchtigkeit kann als Dampf oder flüssig zugeführt werden, in letzterem Fall durch unmittelbares oder mittelbares Aufbringen wie Streichen, Tropfen, Gießen, Spritzen oder zerstäubt über eine Düse. Die Anfeuchtung kann sowohl ein- oder beidseitig erfolgen, im letzten Fall z.B. auch durch vollständiges Eintauchen des Folienmaterials in Wasser.

Produkte aus dieser Polymerkombination sind in sauren und neutralen, wässrigen Medien stabil, in wässrigen Laugen hingegen ist es mit besonderem Vorteil möglich, die Produkte vollständig aufzulösen. Durch Ansäuern kann die Polymerkombination wieder ausgefällt und einem Recycling-Kreislauf zugeführt werden.

Die Erfindung betrifft auch ein Verfahren zur Verklebung oder Beklebung von Gegenständen mit der Polymerkombination.

An dieser Stelle soll betont werden, dass alkalifreie wässrige Feuchtigkeit genügt, den gewünschten Klebeeffekt der Polymerkombination hervorzurufen. Durch Zugabe alkalischer Medien kann die Polymerkombination an der Oberfläche angelöst werden oder vollständig aufgelöst werden, für die erfindungsgemäße Anwendung ist ein alkalisches Milieu vorzugsweise nicht vorgesehen.

Die Bindung der Polymerkombination zu den Oberflächen der o.g. Substrate ist auch in feuchter Umgebung noch ausreichend, sofern keine wesentlichen mechanischen Kräfte auf die Verbindung wirken. Wird die verklebte Polymerkombination jedoch mit viel Wasser benetzt, kann die Verbindung wieder gelöst werden. Die Polymerkombination kann auf diese Weise rückstandsfrei entfernt werden, worin ein wesentlicher Vorteil der erfindungsgemäßen Anwendung besteht.

In einer möglichen Ausführungsform ist die Folie durch ausreichende Zugabe von Wasser von den Substraten rückstandsfrei entfernbar. Bevorzugt ist die Folie durch ausreichende Zugabe von alkalischen Medien von den Substraten rückstandsfrei entfernbar, insbesondere auflösbar.

Für Folien und Pulver aus der Polymerkombination gibt es eine Vielzahl von Anwendungsmöglichkeiten.

Erfindungsgemäß kann die Folie durchsichtig bis milchig oder undurchsichtig sein. Insbesondere enthält die Folie Pigmente.

In einer bevorzugten Ausführungsform ist die Folie aus der Polymerkombination undurchsichtig, was durch Einarbeitung von Pigmenten in das Copolymerisat erreichbar ist. So ist z.B. durch Beimengung von Titandioxid eine Weißfärbung erhältlich. Ohne Pigmentbeimengungen sind die Folien durchsichtig bis milchig. Erfindungsgemäß kann es insbesondere vorgesehen sein, dass die Follie bedruckt ist, insbesondere mit mindestens einer in wässsrigem Alkali löslichen Druckfarbe versehen ist. Die Folien können stellenweise oder komplett mit mindestens einer Farbschicht bedeckt, insbesondere bedruckt sein. Als Druckfarben verwendet man vorzugsweise solche, die in wässrigem Alkali löslich und vorzugsweise in neutralem bis saurem Milieu unlöslich sind. So können Folien aus der Polymerkombination beispielsweise als Etikett verwendet werden, ohne dass es einer Beschichtung mit Haftklebstoff bedarf, wie es beispielsweise für die in der EP 0 316 676 B1 beschriebenen Etiketten erforderlich ist. Bevorzugt wird die Polymerkombination als ablösbares Etikett verwendet.

Die Polymerkombination wird in einer weiteren Ausführungsform als Schutzfolie für glatte Oberflächen wie Glas, Metall und Kunststoff, sowie für beschichtete Oberflächen verwendet.

Die Folien aus der Polymerkombination sind ganzflächig oder nur stellenweise verklebbar, vorzugsweise werden die Folien ganzflächig oder nur stellenweise verklebt. Sie eignen sich hervorragend als Schutzbeschichtung oder punktuell verklebter Schutzüberzug, insbesondere bei Transporten, Zwischenlagerung und Lagerung von Gütern und Produkten. Bevorzugt wird die Polymerkombination als Schutzfolie insbesondere bei Transport, Zwischenlagerung und Lagerung von Gütern, bevorzugt von Automobilen oder Möbeln, eingesetzt. Einen Bedarf an Schutzüberzügen und Schutzbeschichtungen besteht in vielen Branchen und Industriezweigen, insbesondere in der bereits eingangs erwähnten Transport-, Bau-, Sanitär- oder Möbel-Branche, oder beispielsweise auch in der Glas-, Metall oder Automobilindustrie.

Beschichtungen aus der Polymerkombination sind durch Verkleben als Folie herstellbar. Ein weiteres mögliches Anwendungsfeld für solche Beschichtungen ist der Schutz vor Graffiti. Bevorzugt wird die Polymerkombination als Beschichtug, vorzugsweise Schutzbeschichtung, insbesondere zum Schutz vor Graffiti, verwendet. Bevorzugt ist hier der Einsatz zum Schutz von Transporteinrichtungen wie Eisenbahnwaggons.

Die Dicke und Breite der Folie richten sich nach dem jeweiligen Verwendungszweck und können dementsprechend angepasst werden. Die Folienstärke beträgt in der Regel 10 µm bis 200 µm, insbesondere für Schutzfolien sind 25 µm bis 60 µm ausreichend. Die Breite kann in Abhängigkeit ihrer Herstellung beliebig gewählt werden und liegt in der Regel zwischen 20 cm und 800 cm, insbesondere im Bereich von 50 cm bis 120 cm.

Die Polymerkombination lässt sich auch als Schmelzklebstoff verarbeiten, insbesondere in Kombination mit wässriger Verklebung. Auch in diesem Fall wird eine dauerhafte Bindung zu glatten und strukturierten Oberflächen ausgebildet. In Verbindung mit einem Klebrigmachen durch Zuführen wässriger Feuchtigkeit kann die Polymerkombination als Folie in einem mehrstufigen Klebeverfahren eingesetzt werden, wobei sie in einem ersten Schritt feucht und in einem weiteren Schritt heiß verklebt wird.

Bei einer weiteren Ausführungsform wird die Polymerkombination in einem mehrstufigen Klebeverfahren verwendet, wobei die Polymerkombination feucht verklebt wird und in einem weiteren Schritt heiß verklebt wird.

Feuchtes und/oder heißes Verkleben der Polymerkombination lassen sich bei der Herstellung von Verbundwerkstoffen, insbesondere bei der Laminatherstellung, einsetzen. Vorzugsweise wird die Polymerkombination als Klebstoff bei Laminiervorgängen verwendet. Dabei kann die Polymerkombination zum einen, wie bereits erläutert, als reiner Klebstoff verwendet werden, zum anderen fungiert das verklebte Polymer mit besonderem Vorteil als Zwischenschicht, insbesondere als wasserdampfdurchlässige Zwischenschicht. In einer weiteren Ausführungsform wird die Polymerkombination als Zwischenschicht, insbesondere als wasserdampfdurchlässige Zwischenschicht, in Verbundwerkstoffen, insbesondere in Laminaten, verwendet.

Der der Erfindung zugrundeliegende Klebemechanismus kann wie folgt beschrieben werden:

Die Folien und Pulver aus der beschriebenen Polymerkombination sind durch die erwähnten, über die gesamte Länge der Polymerkette der kontinuierlichen Phase verteilten freien Carboxylgruppen, polar. Das bedeutet, dass sie hydrophil sind, also eine große Affinität zu Wasser besitzen. Sie können daher, je nach Härte und Gehalt an freien Carboxylgruppen, Wasser aufnehmen. Dabei werden Wassermoleküle im Polymer eingelagert, die als Weichmacher wirken und die Mobilität der Polymerketten erhöhen. Die Folien bzw. Pulver werden weich und klebrig und können in diesem Zustand auf verschiedene Substratoberflächen aufgetragen werden. Die hohe Polarität der Polymerkombination ermöglicht eine feste Verbindung zu den Substraten. Durch den sich anschließenden Trockenvorgang geht der Weichmachereffekt verloren und der ursprüngliche Zustand der Polymerkombination stellt sich wieder ein. Die Adhäsion zur Substratoberfläche bleibt jedoch erhalten.

Die vorliegende Erfindung betrifft weiterhin eine Klebefolie aus einer zweiphasigen, in wässrigem Alkali auflösbaren Polymerkombination aus
a. einem Alkali-löslichen Co- oder Terpolymer einer α-β-ungesättigten Monocarbonsäure, das im wesentlichen gleichmäßig über die Molekülkette verteilt COOH-Gruppen besitzt, als kontinuierliche Phase und
b. einem in wässrigem Alkali nicht lösbaren Co- oder Terpolymer, das entlang seiner Polymerkette Epoxygruppen aufweist, als diskontinuierliche feindisperse Phase, wobei
c. an der Oberfläche der Polymerteilchen der diskontinuierlichen Phase liegende freie Epoxygruppen mit einem Teil der Carboxylgruppen des Polymers der kontinuierlichen Phase durch Esterbildung miteinander verknüpft sind und die übrigen COOH-Gruppen in unveränderter Form vorliegen,
wobei die Polymerkombination durch Zugabe von wässriger Feuchtigkeit klebrig gemacht ist.

Die Herstellung des Acryl- bzw. Methacrylsäure-Polymers erfolgt wie im Patent EP 0 928 316 B1 beschrieben, wobei anstelle einer Polymerisation in der Schmelze eine Lösungsmittelpolymerisation in organischen Lösungsmitteln bevorzugt sein kann und zu, insbesondere für die Klebeeigenschaften, günstigen Molekülgrößen führen kann.

Die Compoundierung zur Polymerkombination erfolgt, wie in der EP 0 928 316 B1 beschrieben, vorzugsweise in der Schmelze.

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich oder zu mehreren in Kombination miteinander bei einer Ausführungsform der Erfindung verwirklicht sein.

### Beispiele:

Die Härte und der hydrophile Charakter des zweiphasigen Polymercompounds kann u.a. über die Zusammensetzung des COOH-Gruppen-haltigen Matrixpolymeren eingestellt werden (vgl. Tabelle 1). In der Monomeren-Mischung beträgt der Anteil an α-β-ungesättigten Carbonsäuren in der Regel 20 - 40 % Gewicht, bevorzugt 25 - 35 %. Ester der α-β-ungesättigten Carbonsäuren sind zu einem Anteil von 20 - 60 % Gewicht enthalten, bevorzugt 40 - 60 %, und der Anteil an Styrol beträgt, wenn vorhanden, 5 - 50 % Gewicht, insbesondere 15 - 25 %. So nimmt beispielsweise mit steigendem Styrolgehalt auch die Wasserdampfdurchlässigkeit und die Wasseraufnahmefähigkeit der entsprechend eingestellten Folien ab.

**Tabelle 1: Zusammensetzung und Eigenschaften des Carboxylgruppenhaltigen Matrixpolymers.**

| Matrixpolymer | 1 | 2 | 3 | 4 |
|---|---|---|---|---|
| Butylacrylat in % | 57,5 | 52 | 48 | 20 |
| Acrylsäure in % | 27,5 | 29 | 30 | 33 (Methacrylsäure) |
| Styrol in % | 15 | 19 | 22 | 47 |
| Carboxylgruppen-Gehalt in % | 16 | 17 | 18 | 18 |
| Tg in°C | 45 | 50 | 61 | 110 |

Das Gewichtsverhältnis von COOH-Gruppen aufweisendem Polymer zu dem Epoxygruppen aufweisenden Schlagzähmodifikator in der Folie beträgt 9 : 1 bis 1 : 1, insbesondere 5 : 1 bis 1,8 : 1.

Das Compoundieren des Carboxylgruppenhaltigen Polymers mit dem Schlagzähmodifikator erfolgt computergesteuert, wobei dem Gemisch noch Very Low Density Polyethylen (VLDPE), Antiblockmittel wie Silika oder Talkum, Gleitmittel wie Stearinsäure, Stearinsäureamid oder Ethylenamine und Verarbeitungsstabilisatoren aus der Familie der sterisch gehinderten Phenole in bis zu 10 % Gewicht zugesetzt werden können.

**Tabelle 2: Zusammensetzung und Eigenschaften von Folien aus der 2phasigen Polymerkombination.**

| Foliencompound | 1 | 2 | 3 | 4 | 5 |
|---|---|---|---|---|---|
| Carboxylgruppenhaltiges Matrixpolymer in % | 55,5 | 61 | 58 | 62 | 58 |
| Epoxydhaltige Schlagzähkomponente in % | 40 | 35 | 40 | 35 | 40 |
| VLDPE in % | 2 | 2 | | 2 | |
| Gleitmittel in % | 1 | 2 | | 1 | 2 |
| Antiblockmittel in % | 0,5 | | 2 | | |
| Stabilisator in % | 1 | | | | |

| | | **Folie A** | **Folie B** | **Folie C** | **Folie D** |
|---|---|---|---|---|---|
| Zugfestigkeit MR/QR N/mm² | 20/18 | 24/24 | 20/18 | 24/20 | 29/31 |
| Bruchdehnung MR/QR % | 250/300 | 240/180 | 170/180 | 230/190 | 6/7 |
| Wasseraufnahme % | 16 | 10 | 10 | 14 | < 1 |
| Wasserdampfdurchlässigkeit g/m²/24h | 85 | 40 | 50 | 66 | < 5 |
| Tg in °C | 46 | 46 | 50 | 59 | 98 |

Mit ausgewählten Folien wurden Klebeversuche mit neutralem Wasser mit folgenden Ergebnissen gemacht:

**Tabelle 3: Adhäsionsbeurteilung: 1 - Folie nicht ablösbar; 2 - Folie schwer ablösbar, bricht teilweise; 3 - Folie schwer ablösbar, kein Bruch; 4 - Folie leicht ablösbar; 5 - keine Adhäsion.**

| Folie (% Styrol) | A (8) | B (11) | C (14) | D (30) |
|---|---|---|---|---|
| Glas | 1 | 2 | 2 | 5 |
| Aluminium | 1 | 3 | 4 | 5 |
| LDPE | 4 | 5 | 5 | |
| PP-Non Woven | 5 | | | |
| Schreibpapier | | 4 | | |
| Glanzpapier | | 4 | | |
| Stahl, rostfrei | | 2 | | |
| Stahlblech, verzinkt | | 2 | | |

In weiteren Versuchen wurde die beim Verkleben von Folie auf Folie auftretende Adhäsion untersucht.

**Tabelle 4: Klebeversuche "Folie auf Folie". Adhäsionsbeurteilung wie in Tabelle 3.**

| Folie auf Folie | A | B | C | D |
|---|---|---|---|---|
| A | 1 | 1 | 1 | 1 |
| B | 1 | 1 | 1 | 1 |
| C | 1 | 2 | 4 | 5 |
| D | 1 | 1 | 5 | 5 |

Durch Befeuchtung mit 0,5%iger Natronlauge können die Folien A, B und C auch auf Aluminium, Schreibpapier und verzinktem Stahlblech gut verklebt werden. Die Adhäsion wird durch beschleunigte Trocknung im Trockenschrank bei 40 °C nicht beeinflusst.

## Patentansprüche

1. Verwendung einer zweiphasigen, in wässrigem Alkali auflösbaren Polymerkombination in Form einer Folie aus
a. einem Alkali-löslichen Co- oder Terpolymer einer α-β-ungesättigten Monocarbonsäure, das im wesentlichen gleichmäßig über die Molekülkette verteilt Carboxylgruppen besitzt, als kontinuierliche Phase und
b. einem in wässrigem Alkali nicht lösbaren Co- oder Terpolymer, das entlang seiner Polymerkette Epoxygruppen aufweist, als diskontinuierliche feindisperse Phase, wobei
c. an der Oberfläche der Polymerteilchen der diskontinuierlichen Phase liegende freie Epoxygruppen mit einem Teil der Carboxylgruppen des Polymers der kontinuierlichen Phase durch Esterbildung miteinander verknüpft sind und die übrigen Carboxylgruppen in unveränderter Form vorliegen,
als Klebstoff.

2. Verwendung der Polymerkombination nach Anspruch 1, wobei die Polymerkombination durch Zugabe von wässriger Feuchtigkeit, insbesondere wässriger Flüssigkeit, klebrig gemacht wird.

3. Verwendung der Polymerkombination nach Anspruch 1 oder 2, **dadurch gekennzeichnet, dass** die Folie zur einseitigen oder beidseitigen Verklebung vorgesehen ist.

4. Verwendung der Polymerkombination nach einem der vorhergehenden Ansprüche, **dadurch gekennzeichnet, dass** die Folie ganzflächig oder nur stellenweise verklebt wird.

5. Verwendung der Polymerkombination nach einem der vorhergehenden Ansprüche, **dadurch gekennzeichnet, dass** die Folie durchsichtig bis milchig ist oder undurchsichtig ist, insbesondere Pigmente enthält.

6. Verwendung der Polymerkombination nach einem der vorhergehenden Ansprüche, **dadurch gekennzeichnet, dass** die Folie bedruckt ist, insbesondere mit mindestens einer in wässrigem Alkali löslichen Druckfarbe versehen ist.

7. Verwendung der Polymerkombination nach einem der vorhergehenden Ansprüche als ablösbares Etikett.

8. Verwendung der Polymerkombination nach einem der vorhergehenden Ansprüche als Schutzfolie für glatte Oberflächen wie Glas, Metall und Kunststoff, sowie für beschichtete Oberflächen.

9. Verwendung der Polymerkombination nach einem der vorhergehenden Ansprüche als Beschichtung, vorzugsweise Schutzbeschichtung, insbesondere zum Schutz vor Graffitti.

10. Verwendung der Polymerkombination nach einem der vorhergehenden Ansprüche als Schutzfolie insbesondere bei Transport, Zwischenlagerung und Lagerung von Gütern, bevorzugt von Automobilen oder Möbeln.

11. Verwendung der Polymerkombination nach einem der vorhergehenden Ansprüche, **dadurch gekennzeichnet, dass** die Folie durch ausreichende Zugabe von Wasser von den Substraten rückstandsfrei entfernbar ist.

12. Verwendung der Polymerkombination nach einem der vorhergehenden Ansprüche, **dadurch gekennzeichnet, dass** die Folie durch ausreichende Zugabe von alkalischen Medien von den Substraten rückstandsfrei entfernbar ist, insbesondere auflösbar ist.

13. Verwendung der Polymerkombination nach einem der vorhergehenden Ansprüche, **dadurch gekennzeichnet, dass** die Polymerkombination als Schmelzklebstoff verarbeitbar ist.

14. Verwendung der Polymerkombination nach einem der vorhergehenden Ansprüche in einem mehrstufigen Klebeverfahren, **dadurch gekennzeichnet, dass** die Polymerkombination feucht verklebt wird und in einem weiteren Schritt heiß verklebt wird.

15. Verwendung der Polymerkombination nach einem der vorhergehenden Ansprüche als Klebstoff bei Laminiervorgängen.

16. Verwendung der Polymerkombination nach einem der vorhergehenden Ansprüche als Zwischenschicht, insbesondere als wasserdampfdurchlässige Zwischenschicht, in Verbundwerkstoffen, insbesondere in Laminaten.

17. Klebstoff aus einer zweiphasigen, in wässrigem Alkali auflösbaren Polymerkombination in Form einer Folie aus
a. einem Alkali-löslichen Co- oder Terpolymer einer α-β-ungesättigten Monocarbonsäure, das im wesentlichen gleichmäßig über die Molekülkette verteilt COOH-Gruppen besitzt, als kontinuierliche Phase und
b. einem in wässrigem Alkali nicht lösbaren Co- oder Terpolymer, das entlang seiner Polymerkette Epoxygruppen aufweist, als diskontinuierliche feindisperse Phase, wobei
c. an der Oberfläche der Polymerteilchen der diskontinuierlichen Phase liegende freie Epoxygruppen mit einem Teil der Carboxylgruppen des Polymers der kontinuierlichen Phase durch Esterbildung miteinander verknüpft sind und die übrigen COOH-Gruppen in unveränderter Form vorliegen,
wobei die Polymerkombination durch Zugabe von wässriger Feuchtigkeit klebrig gemacht ist.

## Claims

1. Use of a two-phase polymer combination dissoluble in aqueous alkali in the form of a film comprising
a. an alkali-soluble copolymer or terpolymer of an α,β-unsaturated monocarboxylic acid which possesses carboxyl groups distributed essentially uniformly over the chain of the molecule, as a continuous phase, and
b. a copolymer or terpolymer which is insoluble in aqueous alkali and contains epoxy groups along its polymer chain, as a discontinuous finely disperse phase, wherein
c. free epoxy groups on the surface of the polymer particles of the discontinuous phase are linked by esterification with part of the carboxyl groups of the polymer of the continuous phase, and the remaining carboxyl groups are present in unchanged form,
as an adhesive.

2. Use of the polymer combination according to claim 1, wherein the polymer combination is made tacky by adding aqueous moisture, in particular aqueous liquid.

3. Use of the polymer combination according to claim 1 or 2, **characterized in that** the film is provided for bonding on one side or on two sides.

4. Use of the polymer combination according to any of the preceding claims, **characterized in that** the film is bonded over its entire area or bonded only in part.

5. Use of the polymer combination according to any of the preceding claims, **characterized in that** the film is transparent to milky or non-transparent, in particular comprising pigments.

6. Use of the polymer combination according to any of the preceding claims, **characterized in that** the film is printed, in particular provided with at least one printing ink which is soluble in aqueous alkali.

7. Use of the polymer combination according to any of the preceding claims as a detachable label.

8. Use of the polymer combination according to any of the preceding claims as a protective film for smooth surfaces such as glass, metal, plastic and also coated surfaces.

9. Use of the polymer combination according to any of the preceding claims as a coating, preferably a protective coating, in particular for protection against graffiti.

10. Use of the polymer combination according to any of the preceding claims as a protective coating, in particular in the case of transportation, temporary storage and long-term storage of goods, preferably of automobiles or furniture.

11. Use of the polymer combination according to any of the preceding claims, **characterized in that** the film is removable without residue from the substrates by sufficient addition of water.

12. Use of the polymer combination according to any of the preceding claims, **characterized in that** the film is removable without residue from the substrates, in particular dissoluble by sufficient addition of alkaline media.

13. Use of the polymer combination according to any of the preceding claims, **characterized in that** the polymer combination is processable as a hot-melt adhesive.

14. Use of the polymer combination according to any of the preceding claims in a multi-stage adhesion process, **characterized in that** the polymer combination is bonded moist and in a further step is bonded hot.

15. Use of the polymer combination according to any of the preceding claims as an adhesive in laminating operations.

16. Use of the polymer combination according to any of the preceding claims as an intermediate layer, in particular as a water-vapour-permeable intermediate layer, in composite materials, in particular in laminates.

17. Adhesive composed of a two-phase polymer combination dissoluble in aqueous alkali in the form of a film comprising
a. an alkali-soluble copolymer or terpolymer of an α,β-unsaturated monocarboxylic acid which possesses COOH groups distributed essentially uniformly over the chain of the molecule, as a continuous phase, and
b. a copolymer or terpolymer which is insoluble in aqueous alkali and contains epoxy groups along its polymer chain, as a discontinuous finely disperse phase, wherein
c. free epoxy groups on the surface of the polymer particles of the discontinuous phase are linked by esterification with part of the carboxyl groups of the polymer of the continuous phase, and the remaining COOH groups are present in unchanged form,
wherein the polymer combination is made tacky by adding aqueous moisture.

## Revendications

1. Utilisation d'une combinaison de polymères à deux phases, pouvant être dissoute dans des alcalis aqueux, sous forme d'une feuille, constituée par
a. un copolymère ou un terpolymère soluble dans les alcalis d'un acide monocarboxylique α,β-insaturé, qui présente des groupes carboxyle répartis de manière sensiblement régulière sur la chaîne de la molécule, comme phase continue et
b. un copolymère ou un terpolymère non soluble dans les alcalis aqueux, qui présente, le long de sa chaîne polymère, des groupes époxy, comme phase discontinue, finement dispersée,
c. des groupes époxy libres situés à la surface des particules polymères de la phase discontinue étant liés à une partie des groupes carboxyle du polymère de la phase continue par formation d'ester et les autres groupes carboxyle se trouvant sous forme non modifiée,
comme adhésif.

2. Utilisation de la combinaison de polymères selon la revendication 1, la combinaison de polymères étant rendue poisseuse par l'addition d'humidité aqueuse, en particulier de liquide aqueux.

3. Utilisation d'une combinaison de polymères selon la revendication 1 ou 2, **caractérisée en ce que** la feuille est destinée à un collage sur une face ou les deux faces.

4. Utilisation de la combinaison de polymères selon l'une quelconque des revendications précédentes, **caractérisée en ce que** la feuille est collée sur toute sa surface ou seulement par endroits.

5. Utilisation de la combinaison de polymères selon l'une quelconque des revendications précédentes, **caractérisée en ce que** la feuille est transparente à laiteuse ou non transparente et contient en particulier des pigments.

6. Utilisation de la combinaison de polymères selon l'une quelconque des revendications précédentes, **caractérisée en ce que** la feuille est imprimée, en particulier par au moins une encre d'imprimerie soluble dans les alcalis aqueux.

7. Utilisation de la combinaison de polymères selon l'une quelconque des revendications précédentes comme étiquette détachable.

8. Utilisation de la combinaison de polymères selon l'une quelconque des revendications précédentes comme feuille de protection pour des surfaces lisses telles que le verre, le métal et le matériau synthétique, ainsi que pour des surfaces revêtues.

9. Utilisation de la combinaison de polymères selon l'une quelconque des revendications précédentes comme revêtement, de préférence comme revêtement de protection, en particulier pour la protection contre les graffiti.

10. Utilisation de la combinaison de polymères selon l'une quelconque des revendications précédentes comme feuille de protection, en particulier lors du transport, de l'entreposage intermédiaire et de l'entreposage de biens, en particulier d'automobiles ou de meubles.

11. Utilisation de la combinaison de polymères selon l'une quelconque des revendications précédentes, **caractérisée en ce que** la feuille peut être éliminée des substrats sans laisser de résidus par une addition suffisante d'eau.

12. Utilisation de la combinaison de polymères selon l'une quelconque des revendications précédentes, **caractérisée en ce que** la feuille peut être éliminée des substrats sans laisser de résidus par une addition suffisante d'agents alcalins et est en particulier soluble.

13. Utilisation de la combinaison de polymères selon l'une quelconque des revendications précédentes, **caractérisée en ce que** la combinaison de polymères peut être traitée sous forme d'adhésif en masse fondue.

14. Utilisation de la combinaison de polymères selon l'une quelconque des revendications précédentes dans un procédé de collage à plusieurs étapes, **caractérisée en ce que** la combinaison de polymères est collée à l'état humide et collée à chaud dans une étape ultérieure.

15. Utilisation de la combinaison de polymères selon l'une quelconque des revendications précédentes comme adhésif lors de processus de laminage.

16. Utilisation de la combinaison de polymères selon l'une quelconque des revendications précédentes comme couche intermédiaire, en particulier comme couche intermédiaire perméable à la vapeur d'eau dans des matériaux composites, en particulier dans des stratifiés.

17. Adhésif constitué par une combinaison de polymères à deux phases, pouvant être dissoute dans des alcalis aqueux, sous forme d'une feuille, constituée par
a. un copolymère ou un terpolymère soluble dans les alcalis d'un acide monocarboxylique α,β-insaturé, qui présente des groupes COOH répartis de manière sensiblement régulière sur la chaîne de la molécule, comme phase continue et
b. un copolymère ou un terpolymère non soluble dans les alcalis aqueux, qui présente, le long de sa chaîne polymère, des groupes époxy, comme phase discontinue, finement dispersée,
c. des groupes époxy libres situés à la surface des particules polymères de la phase discontinue étant liés à une partie des groupes carboxyle du polymère de la phase continue par formation d'ester et les autres groupes COOH se trouvant sous forme non modifiée,
la combinaison de polymères étant rendue poisseuse par l'addition d'humidité aqueuse.
